# EUROPEAN PATENT APPLICATION

(11) **EP 2 154 921 A1**
(43) Date of publication of application: **17.02.2010**
(21) Application number: 08105012.2
(22) Date of filing: 11.08.2008
(51) Int. Cl.: H04W 52/02

(54) **Method for transferring a base station of a wireless communication network from a standby mode to a fully activated mode**

(71) Applicant: Nokia Siemens Networks OY, 02610 Espoo (FI)
(72) Inventor: Centonza, Angelo, SO22 5BA Winchester (GB); Forssell, Mika, 01150 Söderkulla (FI); Michel, Jürgen, 81475 München (DE); Vesterinen, Seppo Ilmari, 90460 Oulunsalo (FI)
(74) Representative: Bruglachner, Thomas E.

(57) **Abstract**

It is described a method for transferring a base station (BS2) of a wireless communication network from a standby mode to a fully activated mode. The method comprises sending an activation signal (2) from a user equipment (UE) to the base station (BS2). The method further comprises receiving the activation signal (2) by the base station (BS2) and transferring the base station (BS2) to the fully activated mode in response to the reception of the activation signal (2).

## Description

### Field of invention

The present invention relates to the field of wireless communication networks. In particular, the invention relates to a method for transferring a base station from a standby mode to a fully activated mode. Further, the invention relates to a user equipment (UE), a base station, a computer-readable medium and a program element, which are adapted for performing the above mentioned method.

### Art Background

A typical mobile communication network comprises one or more base stations and one or more user equipments. In particular, such a mobile communication network may be a UMTS, a 3GPP Long-Term-Evoultion (LTE) or 3GPP Long-Term-Evolution - Advanced network (LTE-A). In such networks, the user equipments are connected to a base station and may be handed over to another base station, if it is out of the range of the first base station or if the received signal quality to the other base station is higher than to the first base station. As long as a user equipment is connected in an active mode to a base station, it is not appropriate to switch that base station off. A base station, which may be a NodeB (NB) or enhanced NodeB (eNodeB, eNB), especially a Home NB or Home eNB (H(e)NB), generates significant cost by its power consumption if there is no efficient standby mode solution applied in case of service inactivity. Beside of the cost aspect the electromagnetic radiation and possible adverse health effects have to be considered as well.

Current state of the art base stations, including H(e)NBs, are little adaptive to their traffic and service needs. Even if there is no user equipment connected the base station consumes similar amount of energy as in full load. The main reason for that is that a power amplifier in the base station with linear requirements, caused by the applied transmission technology, requires a minimum current which is driven through amplifier transistors to set the operational point.

In off-load operational periods, for example during night time, the base station power consumption remains high probably without any request for service from a user equipment. This procedure keeps operational cost high, and the economical balance bad since in principle the base station could have been entirely switched off. However, the problem is how to wake-up the base station if totally switched off in case of a service request from a user equipment.

In typical deployment scenarios base stations (NBs and eNBs) ensure coverage over a wide physical area and the network is called wide area network. In addition in each wide area cell hot spots (small local areas with high data requirements) like campus areas, shopping malls require the installation of additional base stations with typically lower transmission power which are called micro base stations, pico base stations or H(e)NBs. Such deployment is called hierarchical deployment and the low transmission power base stations ensure that users get sufficient data rates even if there is a high amount of competition amongst the physical resources due to the high number of users at hot spots. The inter base station distance between low transmission power base stations is small (dense deployment). In general the transmission power of low power base stations is similar or even lower than the maximum specified and allowed UE transmission power. For example in LTE a typical UE maximum transmission power is 21 dBm, whereas a typical maximum transmission power for a H(e)NB is 10 dBm.

In a typical hierarchical deployment scenario low transmission power base stations may have access restrictions. The 3GPP therefore has specified the closed subscriber group (CSG) services e.g. using home base stations H(e)NBs or for deploying enterprise networks (e.g. office solution formed from multiple pico base stations). CSG is a private base station or a private network (multiple base stations) providing services to only a closed subscriber group (CSG) of users.

In a typically operation mode, a base station, NB or H(e)NB is operated continuously. If a base station should be turned off, manual procedures or O&M (operation and maintenance) configuration are needed and a reactivation would require either again manual procedures, O&M (operation and maintenance) or a special formed uplink (UL) signal and a specific active receiver in the base stations to detect this special formed signal. Such an operational mode keeps operational cost high and a reactivation complex.

There may be a need in typical base station operation mode for improving the operational costs for base stations and reduce the complexity of reactivation methods.

### Summary of the Invention

This need may be met by the subject matter according to the independent claims. Advantageous embodiments of the present invention are described by the dependent claims.

According to a first aspect of the invention there is provided a method for transferring a base station of a wireless communication network from a standby mode to a fully activated mode. The provided method comprises (a) sending an activation signal from a user equipment to the base station, (b) receiving the activation signal by the base station and (c) transferring the base station to the fully activated mode in response to the reception of the activation signal.

This aspect of the invention is based on the idea that a base station may be set in a standby mode during periods of inactivity and may be reactivated if a user equipment is active again. The states of the base station, i.e. standby mode or fully activated mode, are preferably set by an automated configuration. By switching off the base station during periods of inactivity, the energy consumption may be optimized. The use of the method is not precluded by existing mobile communication network and is preferably based on the parameters and procedures of the existing technologies, interfaces and architectures. The invention may be used for Frequency Division Duplex (FDD) and Time Division Duplex (TDD) technologies.

The method may be preferably used for base stations, i.e. eNBs, in LTE and LTE-A networks, especially H(e)NBs, but may also be used for pico NBs with or without access restrictions, for example deployed in office buildings, to power efficient macro NBs. The method may be further used in connection with different technologies like Wireless LAN Access Points (WLAN AP) or Worldwide Interoperability for Microwave Access Base Transceiver Stations (WiMAX BTS).

With the described method, operational costs for base stations may be saved and electromagnetic radiation from the base stations may be reduced or even eliminated during service inactivity while still providing coverage and service on demand.

Further, in dense deployment scenarios and especially with low power base stations and where the typical range limit of the user equipment uplink transmission is higher than the inter base station site distance, the initiated wake-up of base stations, e.g. wake up by a specific formed signal, may ensure that only selective base stations are reactivated. In deployment scenarios with access restrictions, e.g. H(e)NB deployments, it may be ensured that a base station with access restrictions is only waked up by a user equipment if the user equipment is member of the private network.

According to a second aspect of the invention, there is provided a user equipment. The user equipment comprises a transmitting unit for transmitting an activation signal to a base station. The activation signal is adapted for transferring the base station from a standby mode to a fully activated mode.

An activation signal may be sent preferably automatically, before the user equipment turns from an idle state to an active state. Thereby, the base station may be transferred to an fully activated state immediately when it is needed.

The user equipment may be any type of communication end device, which is capable of connecting with an arbitrary telecommunication network access point such as a base station or a relay node and is adapted for transmitting the activation signal. Thereby, the connection may be established by means of a wireless transmission link. In particular the user equipment may be a cellular mobile phone, a Personal Digital Assistant (PDA), a notebook computer and/or any other movable communication device.

According to a further aspect of the invention, there is provided a base station comprising a receiving unit for receiving an activation signal from an user equipment and a unit for transferring the base station from a standby mode to a fully activated mode.

The base station may be a base station in a GSM, UMTS or LTE network, but also an access point in a WLAN. Preferably, the base station is the home base station of the home cell of the user equipment.

According to a further aspect of the invention, there is provided a program element for transferring a base station of a wireless communication network from a standby mode to a fully activated mode. The program element, when being executed by a data processor, is adapted for controlling the above described method for transferring a base station of a wireless communication network from a standby mode to a fully activated mode.

As used herein, reference to a computer program is intended to be equivalent to a reference to a program element and/or a computer readable medium containing instructions for controlling a computer system to coordinate the performance of the above described method.

The computer program element may be implemented as computer readable instruction code in any suitable programming language, such as, for example, JAVA, C++, and may be stored on a computer-readable medium (removable disk, volatile or nonvolatile memory, embedded memory/processor, etc.). The instruction code is operable to program a computer or other programmable device to carry out the intended functions. The computer program may be available from a network, such as the WorldWideWeb, from which it may be downloaded.

The invention may be realized by means of a computer program respectively software. However, the invention may also be realized by means of one or more specific electronic circuits respectively hardware. Furthermore, the invention may also be realized in a hybrid form, i.e. in a combination of software modules and hardware modules.

In the following there will be described exemplary embodiments of the present invention.

According to an embodiment of the invention, the method for transferring a base station of a wireless communication network from a standby mode to a fully activated mode further comprises switching off a transmitting unit of the base station so that the base station is in the standby mode.

With this embodiment, a solution is provided when base stations, in particular H(e)NBs or closed subscriber group (e)NBs may be switched off. The base station may turn off the entire transmitter chain, whereas the receiver chain remains activated in the case that no service is requested by user equipments for a longer time period. If there is no service activity and user equipments are in range of the base station, switching off the transmitter chain could cause some mobility problems. If a user equipment is in the range of the base station and terminates a data exchange, i.e. going to idle, switching off the base station transmitter would make it impossible for the user equipment to understand when it has to handover to a neighboring cell.

Before the user equipment is moving from radio resource control idle state to radio resource control active state, the user equipment may send a random access channel (RACH) burst containing a specific preamble sequence described in the following. Such a RACH burst may wake up the base station, i.e. transfer the base station from a standby mode to a fully activated mode, and allow the user equipment to understand if it has to handover to another cell, for example by normal cell reselection, or if it may stay in the fully activated base station.

After the user equipment sends a random access channel (RACH) burst containing a specific preamble sequence described in the following the user equipment may move from radio resource control idle to radio resource control active state and may attempt to access the last cell for which it was in radio resource connected state and/or initiate a call re-establishment procedure.

According to a further embodiment of the invention, switching off the transmitting unit of the base station is performed after a specific time of inactivity of the user equipment. This may be done especially when all the user equipments (UEs) camping on the base station have been inactive for a specific time. The specific time may be for example a certain delay time after the last active communication with a user equipment. This delay may be 5 to 10 minutes. Thereby, the base station may still switch off the transmitter chain during periods of inactivity, even if user equipments are in range. This may be done automatically.

According to a further embodiment, the standby mode is a partially deactivated mode. That may mean that only the transmitting chain of the base station may be switched off whilst the receiving chain is still active.

With this embodiment, it can be realized in an efficient manner that the user equipment may transfer a base station in the standby mode in a fully activated mode by sending an activation signal. The base station according to this embodiment is still able to receive such an activation signal.

According to a further embodiment, the activation signal is a RACH burst signal with a specific preamble sequence. The specific preamble sequence may only indicate that the RACH burst signal is an activation signal. It is not necessary to define a signal of a special form and to provide a specific receiver device in the base station. In the described embodiment of the invention, a usual RACH preamble signal may be used.

For the activation signal RACH preamble may be transmitted using specific time slots and frequency resources reserved or configured for an activation signal RACH preamble transmission. If the network is synchronized in frequency and time the user equipment may rely on the slot and frame timing of the strongest active received base station. Same may apply if the deactivated base station is synchronized to the strongest active received base station measured at the deactivated base station.

No modification to a normal transmit operation and to a signal besides the preamble have to be performed. The sleeping base station, i.e. the base station in the standby mode, may receive the activation signal, i.e. the "wake up" RACH burst, which may be sent in a usual transmission form of the system. Therefore, the method may be kept simple without any further change to the transmitting operation.

For the inbound mobility case, i.e. a user is connected to a wide area base station and moves to a H(e)NB with access restrictions, user equipments may send specific RACH preambles triggering the H(e)NB base station transmitter to transfer in an active mode. Further, the preamble may trigger the base station to hand over the user equipment to a closed subscriber group. In particular, to activate the downlink transmitter, a LTE RACH may be used with specific assigned preamble sequences.

For example, a specific preamble may be predefined and used for activating the base station or H(e)NB. This may be a conventional LTE RACH signal with specific preamble sequences.

For LTE, the physical layer random access preamble may consist of a cyclic prefix and a sequence part. The duration and further parameter values may be listed in Release 8 UMTS specification 36.211 and may depend on the frame structure and the random access configuration and for normal transmit operation higher layers control the preamble format.

The transmission of a random access preamble, if triggered in normal mode by the MAC layer, is restricted to certain time and frequency resources and this may be the case as well for "wake up" RACH. In LTE, the resources may be enumerated in increasing order of the sub-frame number within the radio frame and the physical resource blocks in the frequency domain. Index 0 corresponds i.e. to the lowest numbered physical resource block and sub-frame within the radio frame.

For LTE frame structure type 1 with preamble format 0-3, there may be at most one random access resource per sub-frame.

In LTE normal mode operation, the start of the random access preamble may be aligned with the start of the corresponding uplink sub-frame at the user equipment assuming a timing advance of zero.

For wake up RACH, the user equipment may assume an absolute value of the relative time difference between the radio frame in the current cell and the target cell which is the cell currently in sleep mode.

For LTE the random access preambles may be generated from Zadoff-Chu sequences with zero correlation zone, generated from one or several root Zadoff-Chu sequences. The network may configure the set of preamble sequences the UE is allowed to use for normal mode operation. In each cell there is a set of 64 preamble sequences available.

The set of 64 preamble sequences in a cell may be found by including first, in the order of increasing cyclic shift, all the available cyclic shifts of a root Zadoff-Chu sequence with the logical index RACH_ROOT_SEQUENCE described in 3GPP Release 8 physical layer specifications, where RACH_ROOT_SEQUENCE is broadcasted as part of the System Information. Additional preamble sequences, in case 64 preambles cannot be generated from a single root Zadoff-Chu sequence, may be obtained from the root sequences with the consecutive logical indexes until all the 64 sequences are found.

The specific "wake up" preamble for a base station with a specific configured RACH_ROOT_SEQUENCE may be n^{th} preamble out of the set of 64 preamble sequences (1≤n≤64). The parameter n may be preconfigured or derived at UE and base station without explicit signaling, e.g. from the physical cell identification PID of the base station in standby mode. A possible allocation would be n=[PID mod 64]+1 and the advantage would be that, even if e.g. neighboring H(e)NBs are configured with the same RACH_ROOT_SEQUENCE, there will be still selective wake up of one or the other H(e)NB possible if their physical cell identification is different.

The LTE root sequences and the LTE physical cell identification may be included and signaled via neighbor cell lists from surrounding base stations.

According to a further embodiment, the preamble is derived from a base station downlink scrambling code or a physical cell identification (PID).
This also may be a conventional RACH signal with specific preamble sequence. With such a preamble it may be achieved that even if the same RACH preamble sequences in a system are used in neighboring cells, only the base station assigned to the user equipment is transferred to an activated mode.

Therefore, the probability is low that a wrong base station or H(e)NB is transferred to a fully activated mode. This preamble may be particularly suitable for a scenario, where an idle user equipment moves to active within its inactive H(e)NB closed subscriber group and tries to activate the assigned base station, i.e. H(e)NB, before performing any cell reselection.

Further, the same RACH preamble sequence or RACH preamble set may be used for an activation signal for transferring H(e)NBs to a fully activated mode up in the whole system. With such an activation signal, the activation of a base station or H(e)NB may be triggered by a user equipment which is in a foreign home zone.

For example in LTE for each base station capable of the described standby mode may be configured with two RACH_ROOT_SEQUENCEs, the conventional RACH_ROOT_SEQUENCE (RRS1) used for state of the art RACH signaling and a second RACH_ROOT_SEQUENCE (RRS2) common to all standby capable base stations like H(e)NBs. This may be a system wide unique RACH_ROOT_SEQUENCE per operator. For RRS2, the set of the 64 preamble sequences may be used for LTE system enhancement, e.g. one sequence out of the 64 sequences may be defined for emergency "wake up" RACH. This sequence may used by the user equipment in case an emergency call is initiated. Then all of the base stations in standby mode may move to active mode and ensure that a proper emergency call is possible.

Regarding the remaining 63 sequences, the UE may select the sequence dependent on the physical cell identification (PID) of the base station, which shall be waked up. A possible allocation may be that sequence n=1 is used for emergency calls and wakes up every base station in standby mode. To wake up a base station in non emergency case with m=PID, the UE may use RACH sequence n=[m mod 63]+2. The advantage may be that even with the operator or network wide used unique RRS2 there may be still selective wake up of one or the other base station or H(e)NB possible, if their physical cell identification is different A user equipment may sent a single RACH burst or a sequence of RACH bursts using specific assigned preambles like that mentioned before.

According to a further embodiment, the user equipment is assigned to a specific base station.

With this embodiment, it may be realized that the user equipment is assigned member of a home base station and part of closed subscriber group.

With this embodiment, there may be an information element stored in the UE persistent memory or on the subscriber identification module chip card regarding the physical cell identification of the home base station and the RACH_ROOT_SEQUENCE used by the home base station (H(e)NB).

To wake up the home base station methods a set forth switching on the home base station and move the device to active mode may be applied, further comprising that the RACH_ROOT_SEQUENCE may be derived from the data stored in the UE persistent memory or on the subscriber identification module chip.

According to a further embodiment, the user equipment is adapted to detect its current location for determining if it is located in range of its assigned base station and to send the activation signal when in the range of its assigned base station.

With this embodiment it may be realized that a user equipment only sends an activation signal to the base station or base stations it is assigned to, for example to its home base station or a H(e)NB where the user is registered member of the closed subscriber group. This activation RACH signaling may be done only if the user is near those base stations and for that, a user equipment may comprise a Global Positioning System (GPS) receiver or evaluate a wide area (WA) fingerprint for location detection. Also any other form of location detection may be used. The determination on the base of GPS data is preferred as user equipments often comprise already a GPS receiver.

In the described method, if the base station or H(e)NB is in the standby mode with the transmitter switched off, a user equipment assigned to a closed subscriber group, a home zone or a specific base station may not detect its home cell and therefore does not know that the home cell base station is available and may be activated. With this embodiment, a user equipment, which is assigned to a base station or H(e)NB, may perform the method for transferring the base station from a standby mode to a fully activated mode, if the WA fingerprint, i.e. the monitored physical cell identifiers are the neighbor cells or the persistent neighbor cells (neighbor cells which will not be switched off e.g. wide area base stations) or GPS data indicate that the current location of the user equipment is in its home zone or range of the assigned base station and no H(e)NB or base station broadcast signal may be found.

In the described method, the user equipment may detect with a WA fingerprint or GPS data that its current location is in its home zone or the zone where it is registered to base station of a closed subscriber group. Subsequently, the user equipment may send an activation signal for the home base station with the methods as set forth.

For the selective wake-up of the assigned H(e)NB only the RACH_ROOT_SEQUENCE derived from the data stored in the UE persistent memory or on the subscriber identification module chip may be used.

According to a further embodiment, the user equipment moves to radio resource control active state after sending the activation signal. This may provide the advantage that the base station may have time to reactivate the transmitting chain and send a response signal to the user equipment.

The terminal may connect to the reactivated cell with channel assignment parameters signaled on common channels and response signal.

In case the connection fails, radio link failure procedure or radio link re-establishment procedure may be executed.

According to a further embodiment, the user equipment sends the activation signal during specific time intervals and/or for specific frequency resources.

Transferring the base station from a standby mode to a fully activated mode may be performed during a "RACH sleeping cycle period". A usual channel request transmission waiting time on a RACH channel has a duration of tens or hundreds of ms. A base station in the standby mode may apply longer RACH periods to receive activation signals to further minimize radio activity and power consumption. This may be similar to a paging block cycle in paging channel, like once every 1, 2, 5 seconds.

With this embodiment, unnecessary signaling may be avoided. The base station may listen during every RACH cycle period for any incoming communication on the RACH channel and for that may activate necessary radio actions for the duration of the RACH period.

A user equipment may know the RACH cycle period to avoid sending activation RACH signals in every potential RACH slot to ensure that the base station receives the message. A user equipment may use for example radio parameters, like frequency, that were valid during the last communication with the base station. As an alternative, a base station in standby mode may broadcast synchronization or frequency channel information periodically, for example in the same period as for the reception of the activation signal to minimize radio activity time and to allow user equipments to detect base stations in the standby mode.

Therefore, a synchronization of the base stations power off/on cycles to user equipments periodic registrations may be utilized as follows: According to the LTE standard the user equipment active to idle transition is initiated by the H(e)NB based on user equipment activity monitoring utilizing radio resource connection release messages. Upon detecting in-activity, the H(e)NB may send a "Release Request" to a Core Network that responds with a "Release Command" to the H(e)NB that may contain time period information for the periodic Tracking Area Updates by the user equipment. The H(e)NB shall store this timer information for deriving its internal transmitter power off period. The H(e)NB may issue the radio link connection release to the user equipment which causes "movement to idle mode" and if no other user equipments are in the active mode, the H(e)NB may power-off the transmitter chain.

At the same time, the H(e)NB may start its internal timer for the transmit power off period based on the received update timer value, which is normally targeted only to the user equipment. Upon expiration of the transmit power off period timer the H(e)NB may power on the transmitter chain. At the same time, the user equipment may be active for the periodic update and if it is still in the range of the closed subscriber group cell or H(e)NB, it may detect the closed subscriber group cell from the broadcast system information as usual. When the periodic registration is completed, the user equipment may return back to idle mode and the H(e)NB may switch the transmitter chain off.

Another improvement may be the use of the user equipment periodic registrations in idle mode to synchronize the base station or H(e)NB transmitter power off and power on cycles to happen at the same rate as the activation for the periodic tracking area updates in the user equipment.

According to a further embodiment, the method for transferring a base station of a wireless communication network from a standby mode to a fully activated mode comprises detecting, whether the user equipment is authorized to establish a connection with the base station.

If an activation signal is detected on the monitored channel, the base station may be reactivated and switched to normal operation and may optionally ensure that the user equipment trying to establish the connection is authorized, i.e. is assigned to the base station or home cell of the base station.

If an unauthorized user equipment is trying to establish a connection with the base station, the base station does not respond or wake up from standby mode.

The detection of unauthorized "wake up" may be that the base station e.g. the H(e)NB detects in stand by mode a RACH with a valid RACH preamble sequence (a sequence out of the allowed RACH sequence set with 64 preamble sequences per cell) but the sequence is not the n^{th} sequence configured for wake up use or, in case of PID dependent wake up sequence selection, the sequence is not the sequence n=[PID mod 64]+1.

In case, a base station or H(e)NB does not respond to the user equipment, the user equipment may use normal cell reselection mechanisms after not receiving a response from the base station. In detail if in the above mentioned procedure the downlink from the fully activated base station does not appear, for example due to inaccuracy of a macro fingerprint from the user equipment, the user equipment may repeat the transmission of activation signals, i.e. RACH preamble burst, with a predefined number of repetitions and may stop sending activation signals after these attempts have failed.

According to a further embodiment, the user equipment is synchronized to a wide area base station before sending an activation signal.

Several cells of a region may be synchronized for reducing the computation complexity for detection of activation signals.

A frame synchronization will provide the user equipments an a priori knowledge of the frame timing of all cells and their base stations in the region, derived from a synchronization on any single cell.

The frame timing has not to be perfect, because the RACH has an extended cyclic prefix which anyhow is needed to cope with different transmission delay times due to unknown terminal position. Further, since the base station is in standby mode, there is in principle no other user that can be disturbed.

A signaling information may be added beforehand to the broadcast information of all cells of a region, which indicates for a service area that cells may be disabled in that region and probably also a lifetime information about message validity, and an additional information may contain an information for the user equipment how long and intense the user equipment may try to synchronize and sent activation signals. This limitation may help that a user equipment, which is constantly out of coverage, does not discharge the battery by sending infinitely activation and doing excessive cell search activities.

A user equipment, which has read the cell disable capability information, may store it for a given time, and as long this information has a valid lifetime, the idle mode behavior in case no suitable cells are detected is modified. If the conventional cell search was unsuccessful for a specific time, and the cell disabled cell indicator was received, and the information has a valid lifetime, the terminal may enter a mode to read available weak signals from base stations.

For the described method, the synchronization of the user equipment may reduce the computation complexity for detection of an activation signal but is not necessarily needed.

However, the frame synchronization to the strongest base station will provide the terminal an a priori knowledge of the frame timing of a base station in the standby mode.

For the uplink the receiver in the base station in the standby mode may still be active, this means for the user equipment that in practice no modification to the normal transmitting operation may be needed. The base station in receiving only mode will receive the activation signal which has been sent in the usual transmission form of the system. As mentioned above, only the used preamble indicates the wake up RACH nature.

It should be noted that the RACH preamble format may be predetermined, i.e. standardized, for an activation RACH signal, for example a preamble format 1 or 3 in case of LTE. Further, the system information may contain also information about the transmission power and power ramp up for the activation preambles. This may be different than for normal RACH, since they will impact the probability that an activation RACH sent within one disabled cell will be detected also in other disabled cells.

The described method may be extended to support also network initiated service requests, while the base station is in the standby mode with the transmitter chain powered off due to power saving. This may be utilized by switching the base station transmitter chain power on upon reception of a paging request message. In case the user equipment does not respond to paging within a certain time, the base station may move back to power saving mode and switch the transmitter chain off again.

According to the described method, the user equipment may obtain the capability to send a base station activation signal in the following cases. The user equipment may be registered at a base station or H(e)NB, for example the user equipment is listed at least in one closed subscriber group supported by the H(e)NB. Further, the user equipment may detect with WA fingerprint or GPS data or any other form of location detection that its current location is in its home zone or the zone where it is registered to a closed subscriber group H(e)NB or base station. Further, the user equipment may send an activation signal, if no broadcast channel may be detected.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered as to be disclosed with this application.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Figure 1 shows a transactional flow diagram illustrating a method for transferring a base station from a standby mode to a fully activated mode in accordance with the invention.
Figure 2 shows a cell layout of a cellular communication network.
Figure 3 shows a cell layout of a cellular communication network with a base station in standby mode.
Figure 4 shows a cell layout of a cellular communication network in an operational state of synchronizing a user equipment with a base station.
Figure 5 shows a cell layout of a cellular communication network in an operational state of sending an activation signal to a base station in a standby mode.
Figure 6 shows a cell layout of a wide area network.

### Detailed Description

The illustration in the drawing is schematically. It is noted that in different figures, similar or identical elements are provided with the same reference signs.

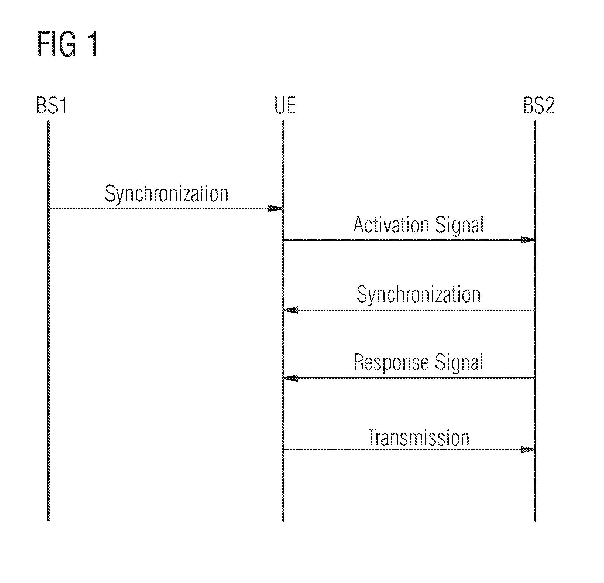

Figure 1 shows a transactional flow diagram. In a first step, not shown, a user equipment UE, which is assigned to a home zone or base station, detects with any kind of location detection, for example WA fingerprint or GPS data, if its current location is in its home zone or in the range of the assigned base station.

In a second step, the UE synchronizes to the strongest received base station BS1. This step is optional. With the synchronization, the UE may get further information about the assigned base station, as for example periods of activity.

In a third step, the UE transmits an activation signal, i.e. a RACH burst, to the assigned base station BS2 with a wake-up preamble assigned to the base station BS2.

Subsequently, the UE waits for activation of BS2 transmitter and specifically for the transmission of the synchronization signals and common control channels from BS2. Optionally, for fast UE movement from radio resource idle to radio resource connected mode a response signal from the fully activated base station BS2 may be transmitted. If the UE has sent the activation signal to another base station as it is assigned, the base station transmitter is not activated. Otherwise, the UE may receive a response from the base station BS2. Then, the UE enters into a normal transmitting procedure, i.e. RACH procedure.

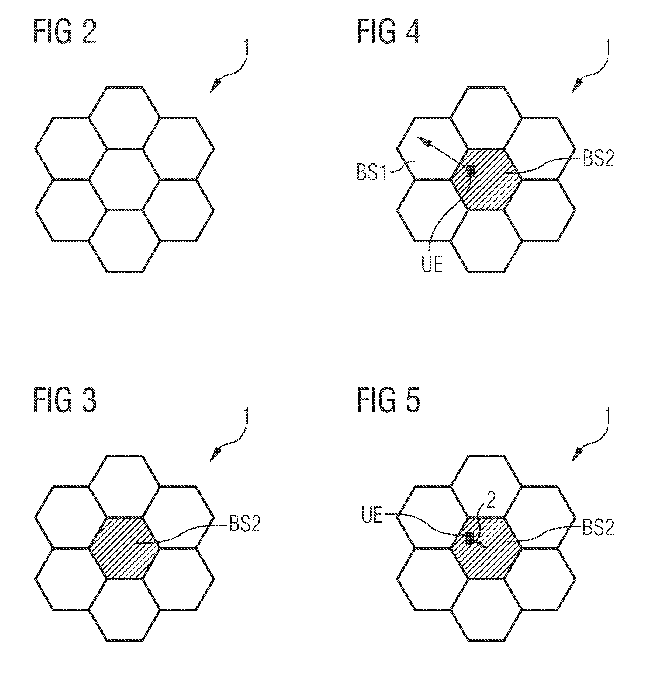

In Figure 2, a typical cell layout 1 is shown. Each cell contains a base station or H(e)NB. In this case, all cells are active.

If there has been a specific time interval of inactivity of a user equipment, the base station and thus the center cell BS2 is transferred to a standby mode as may be seen in Figure 3. That means that the base station has switched off the transmitter chain and only the receiving chain is still active.

If a UE intends to turn from an idle to an active mode, the UE synchronizes to the strongest surrounding cell BS1 and may get further information about the active periods of the assigned base station in the center cell. This may be seen in Figure 4.

Subsequently, the UE sends an activation signal 2 to the assigned base station, e.g. H(e)NB, in the center cell. The receiving chain of the assigned base station in the center cell is still active. Then, the assigned base station wakes up the transmitter chain and the UE may then continue with a normal RACH procedure or transmitting procedure in case of receiving the point to point response signal and being already in radio resource control active mode.

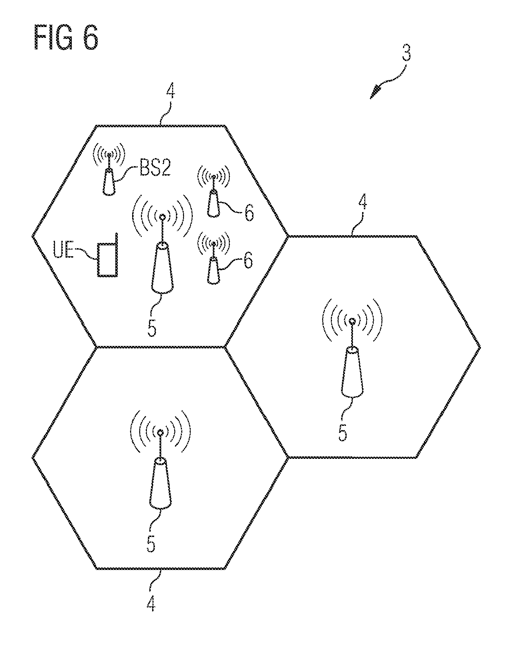

Figure 6 shows a cell layout of a wide area network 3. Each cell 4 of such a network comprises a base station 5. In each cell, a plurality of base stations 6, BS2 with typically lower transmission power is located. These base stations 6, BS2 are called micro base stations, pico base stations or H(e)NBs and are located preferably inside of buildings so that the signals of the H(e)NBs 6, BS2 do not interfere each other. A user equipment UE is assigned to a H(e)NB BS2.

The UE may detect its current location with a wide area fingerprint, i.e. by determining the signal strength and physical cell IDs of the different base stations 5. The strength of the signals and physical cell IDs when the UE is located near its H(e)NB BS2 is stored and compared with the current signal strengths. Therefore, the UE may detect if it is located in the range of its assigned H(e)NB BS2.It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

### List of reference signs:

- UE: User Equipment
- BS1: strongest neighbouring base station
- BS2: assigned base station
- 1: cell layout
- 2: activation signal
- 3: wide area network
- 4: cell in the wide area network
- 5: base station
- 6: base station with lower transmission power

## Claims

1. Method for transferring a base station (BS2) of a wireless communication network from a standby mode to a fully activated mode, the method comprising
• sending an activation signal (2) from a user equipment (UE) to the base station (BS2),
• receiving the activation signal (2) by the base station (BS2) and
• transferring the base station (BS2) to the fully activated mode in response to the reception of the activation signal (2).

2. The method as set forth in claim 1, further comprising switching off a transmitting unit of the base station (BS2) so that the base station (BS2) is in the standby mode.

3. The method as set forth in claim 2, wherein switching off the transmitting unit of the base station (BS2) is performed after a specific time of inactivity of the user equipment (UE).

4. The method as set forth in any one of the preceding claims, wherein
the standby mode is a partially deactivated mode.

5. The method as set forth in any one of the preceding claims, wherein
the activation signal (2) is a RACH burst signal with a specific preamble sequence.

6. The method as set forth in claim 5, wherein
the preamble is derived from a base station downlink scrambling code or a physical cell identification (PID).

7. The method as set forth in any one of the preceding claims, wherein
the user equipment (UE) is assigned to a specific base station (BS2).

8. The method as set forth in claim 7, wherein
the user equipment (UE) is adapted to detect its current location for determining if it is located in a range of its assigned base station (BS2) and to send the activation signal when in the range of its assigned base station (BS2).

9. The method as set forth in any one of the preceding claims, wherein,
after sending the activation signal (2), the user equipment (UE) moves to radio resource active state.

10. The method as set forth in any one of the preceding claims, wherein
the user equipment (UE) is synchronized to a wide area base station (BS1) before sending the activation signal (2).

11. The method as set forth in any one of the preceding claims, wherein
the user equipment (UE) is adapted to send the activation signal (2) during specific time intervals and/or for specific frequency resources.

12. The method as set forth in any one of the preceding claims, further comprising
detecting whether the user equipment (UE) is authorized to establish a connection with the base station (BS2).

13. User equipment (UE) comprising
a transmitting unit for transmitting an activation signal (2) to a base station (BS2), which is in a standby mode, wherein the activation signal (2) is adapted to transfer the base station (BS2) from a standby mode to a fully activated mode.

14. Base station (BS2) comprising
• a receiving unit for receiving an activation signal (2) from a user equipment (UE), and
• a unit for transferring the base station (BS2) from a standby mode to a fully activated mode.

15. A program element for transferring a base station (BS2) of a wireless communication network from a standby mode to a fully activated mode, the program element, when being executed by a data processor, is adapted for controlling the method as set forth in any one of the claims 1 to 12.
